(19) **Europäisches Patentamt European Patent Office Office européen des brevets**

(11) **EP 2 510 734 B1**

(12) **EUROPEAN PATENT SPECIFICATION**

(45) Date of publication and mention
of the grant of the patent:
**11.11.2020 Bulletin 2020/46**

(21) Application number: **09852106.5**

(22) Date of filing: **08.12.2009**

(51) Int Cl.:
*H04W 72/06* *(2009.01)*    *H04W 72/08* *(2009.01)*

(86) International application number:
**PCT/SE2009/051388**

(87) International publication number:
**WO 2011/071424 (16.06.2011 Gazette 2011/24)**

(54) **ALLOCATION OF FREQUENCY SPECTRUM IN SPECTRUM-ON-DEMAND SYSTEMS**

ZUWEISUNG EINES FREQUENZSPEKTRUM IN SPEKTRUM-ON-DEMAND-SYSTEMEN

ALLOCATION D'UN SPECTRE DE FRÉQUENCES DANS DES SYSTÈMES DE SPECTRE À LA DEMANDE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**17.10.2012 Bulletin 2012/42**

(73) Proprietor: **Telefonaktiebolaget LM Ericsson (publ)**
**164 83 Stockholm (SE)**

(72) Inventors:
• **SACHS, Joachim**
**168 53 Stockholm (SE)**
• **IRNICH, Tim**
**41460 Neuss (DE)**

(74) Representative: **Ericsson Patent Development Torshamnsgatan 21-23 164 80 Stockholm (SE)**

(56) References cited:
**EP-A1- 1 641 186     EP-A2- 0 719 062
WO-A1-01/50278     WO-A1-99/00984
WO-A1-2009/054565     US-A1- 2007 026 868
US-A1- 2009 143 025**

• **DAPENG WU ET AL: 'Scalable Video Coding and Transport over Broad-Band Wireless Networks' PROCEEDINGS OF THE IEEE vol. 89, no. 1, January 2001, NEW YORK, US, pages 6 - 20, XP011044473**

**EP 2 510 734 B1**

**Description**

TECHNICAL FIELD

The invention relates to the allocation of data traffic of a wireless communication system to different frequency spectrum resources being available to the communication system. Particular aspects of the invention relates to the allocation of data traffic to spectrum resource where a wireless communication system has primary access to some of the resources in use, and accesses other spectrum resources in use on a secondary basis.

BACKGROUND

Today, wireless communication is widely used and a multitude of wireless communication systems have been developed to accomplish such communication. Well known wireless communication systems are e.g. the Global System for Mobile communications (GSM), the General Packet Radio Service (GPRS), the Universal Mobile Telecommunications System (UMTS) and other cellular technologies or similar. Other well known examples of wireless communication systems are the Wireless Local Access Networks (WLAN) and the Worldwide Interoperability for Microwave Access (WiMAX).
As is well known, the assignment of a relevant frequency spectrum resource to be used is a fundamental precondition for substantially any wireless communication system.
However, the usage of frequency spectrum has been liberalized in that frequency resources may no longer be exclusively assigned to a particular wireless communication system, largely based on the observation that frequency resources assigned by licenses to licensees are not used, e.g. not at all or not to the full extent. For example, one possible approach pursued in regulations is to license a frequency resource to a licensee (primary user), while the frequency resource can be simultaneously used by other users (secondary users) under the condition that they do not cause harmful interference to the wireless communication system of the primary user. In the future there will be a multitude of spectrum usage regimes applied for different resources/portions of the electro-magnetic spectrum.
One example is a *dedicated licensed spectrum* operation. Here, the licensee (typically the operator of the communication system in question) receives an exclusive license for using a certain spectrum resource for his communication system. The license is typically valid within a certain region and/or for a certain period of time. A dedicated licensed spectrum is e.g. used by today's 2G/3G cellular communication systems.
Another example is the *licensed spectrum operation with opportunistic spectrum access by secondary user systems.* Here, a primary user receives a non-exclusive license for using a certain spectrum resource for his communication system. The non-exclusive license is typically valid within a certain region and/or for a certain period of time. Other systems are allowed to use the licensed spectrum resource under a secondary license and/or under certain usage regimes. A secondary system may e.g. be required to sense if the primary system uses the spectrum resource. A detection of a primary usage - e.g. within a certain region and/or during a certain period of time - may require the secondary system to (at least temporarily) withhold from or cease usage of the licensed spectrum resource. This may e.g. be the case if the interference caused from the secondary system to the primary system exceeds a certain threshold. An example of the above can be found in the secondary usage of white space spectrum in US TV bands, as developed in IEEE 802.22.
Still another example is the *licensed spectrum operation with allowance for spectrum trading.* Here, a primary licensee receives an exclusive license for using a certain spectrum resource for his communication system with the option for renting out the usage of the licensed spectrum in exclusive secondary licenses. The license is typically valid within a certain region and/or for a certain period of time. A spectrum trading opportunity may e.g. occur when the primary licensee has the spectrum usage right for a certain spectrum resource in a specific region for 20 years, but is only using the spectrum at certain time periods. The primary user may then lease the temporal/regional usage of the spectrum resources to secondary users; e.g. on a yearly or monthly basis, or only during daily time periods. An example may be the renting of TV spectrum resource to cellular systems during times when no TV-programs are transmitted, e.g. during night.
Naturally, a further example is the *un-licensed spectrum operation.* Here, the usage of a certain spectrum resource is allowed to any system which fulfils certain usage regimes, e.g. maximum allowed transmission power, sharing rules, etc. The allowance is typically valid within a certain region and/or for a certain period of time.
Of course, the examples above are not exhaustive and the invention is applicable to other examples of spectrum usage, which may result in different availability and usability for a certain spectrum user.
It should be added that the frequency spectrum resources mentioned above may comprise any spectrum portion within which a wireless communication may be accomplished. In addition, a frequency spectrum resource may e.g. comprise a single continuous spectrum portion or several partitioned spectrum portions.
With the independence of spectrum usage from specific service types it is possible for communication systems to combine the usage of a multitude of spectrum resources, as long as the spectrum usage regime for each spectrum resource is applied. A service type may e.g. be the transmission of a message or similar (e.g. SMS, e-mail or similar), the transmission of voice and/or video or similar (e.g. conversations, music and/or movies or similar), or the transmission of data (e.g. data files or similar) etc. In addition, A service type may e.g. be broadcasted and/or unicasted or similar. The services may also be categorized in to Quality of Service (QoS) classes or similar, e.g. such as Conversational, Streaming, Interactive and Background or similar as defined by the standards of the 3GPP.

A *spectrum-on-demand* system can be defined as a system that acquires spectrum resources based on the current demand, i.e. a system that can acquire additional resources when this is considered to be beneficial. An example of a *spectrum-on-demand system* is a wireless communication system which, in addition to primary spectrum resources (possible exclusively licensed), makes use of secondary spectrum resources (typically not exclusively licensed) in case the current demand so requires. An exemplifying spectrum-on-demand system may e.g. have access to a primary spectrum resource on exclusive basis and to one or several secondary spectrum resource on opportunistic basis or similar. Another exemplifying spectrum-on-demand system may e.g. only have access to one or more secondary spectrum resource on opportunistic basis or similar.

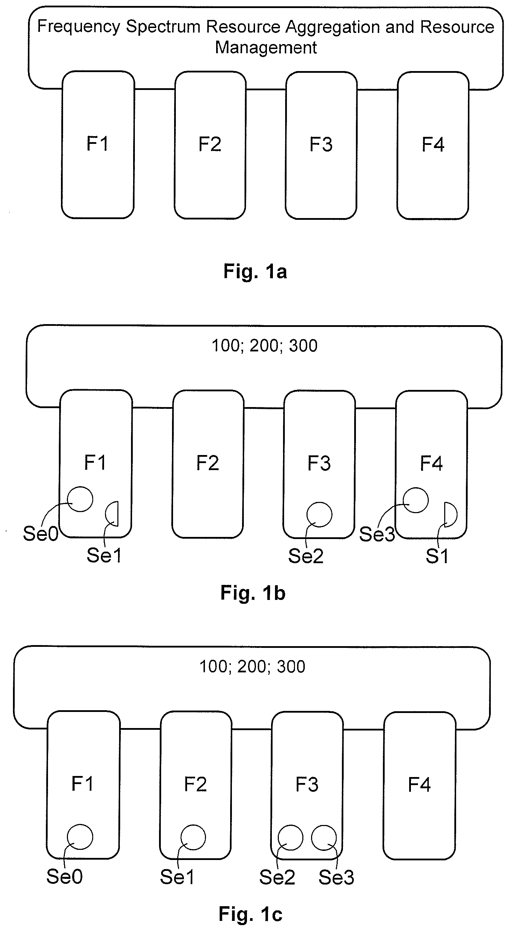

An example of a spectrum-on-demand system is depicted in Fig. 1a. Here a spectrum resource aggregation function of a wireless communication system performs an aggregation of different spectrum resources F1-F4 and performs common resource management for these resources. One spectrum resource F1 may for example be the licensed spectrum of the operator of the communication system in question with exclusive usage right according to a dedicated licensed spectrum operation; another spectrum resource F2 may be available for the system in question with a temporarily exclusive usage right according to a secondary license that was bought from another communication system operator or a TV broadcast operator or similar; a third spectrum resource F3 may be available as a non-exclusively resource licensed by the operator of another system (e.g. a TV broadcast operator or a radar system) which is used opportunistically by the communication system in question; a fourth spectrum resource F4 can be available as an unlicensed spectrum resource that is used by an unknown amount of systems. Naturally, the spectrum resources F1-F4 may be of other types and there is nothing preventing that one or several of the spectrum resources are of the same type.

In a spectrum-on-demand system a common resource management is typically performed for the total resources comprising the different resource components provided by the individual spectrum resources. However, this does not exclude that further resource management functions are performed within each system resource, like for example, power control, congestion control, scheduling, resource-specific admission control, etc. The common resource management may e.g. include functions like common admission control of services, transmission capacity management and service allocation. The transmission capacity management comprises the capability to decide when to change the current transmission capacity situation, i.e. acquiring or releasing secondary spectrum resources. The service allocation comprises the capability to allocate different services to different spectrum resources.

In a spectrum-on-demand systems the amount of capacity that a particular spectrum resource can provide may fluctuate (e.g. according to external factors, like the number of other systems that make use of this spectrum or dynamic overhead for determining availability/usability of the spectrum resource). Thus, the transmission capacity required for a particular service may not be available at every instance of the lifetime of the session. For example, if many users are assigned to a variable spectrum resource it may happen that the negotiated bit rate and service performance is not achieved.

Hence, in view of the above there seems to be a need for improvements directed to the allocation of transmission capacity for the services provided in a wireless communication system.

US 2009/143025 A1 relates to a system for selecting spectrum. The system comprises a licensed spectrum transceiver configured to communicate over licensed spectrum and an unlicensed spectrum transceiver configured to communicate over unlicensed spectrum. The system further comprises a spectrum selector configured to select the licensed transceiver or the unlicensed transceiver for communication. Further, a medium access control layer is configured to control access for a communication to unlicensed spectrum or licensed spectrum. The system further comprises a differentiator configured to format the communication over the unlicensed spectrum or the licensed spectrum.

EP 1 641 186 A1 relates to a frequency band allocation device. The device comprises a frequency band selection unit for selecting usable frequency bands from a dedicated frequency band, a registered frequency band and an unlicensed frequency band. The device further comprises a frequency band allocation unit for allocating a frequency band out of the selected usable frequency bands to a user, to satisfy user required QoS and maximize system frequency utilization factor.

## SUMMARY OF THE INVENTION

The invention is defined by independent claims. Dependent claims define preferred embodiments of the invention.

In general the amount of transmission capacity that is demanded for a certain service is elastic. For example, a service may require a minimum amount of transmission capacity that is guaranteed by the communication system, which in addition may provide information about the maximum amount of transmission capacity the service may utilize. This is for example the case for scalable video, which can provide a better quality when so-called enhancement layers are transmitted in addition to the basic quality.

By utilising a possible elasticity of the services provided in a communication system it is possible to provide a solution that eliminates or reduces at least one of the disadvantages discussed in the background section above. Thus, it is possible to increase the probability of higher performance provided to users and/or higher system capacity and/or required quality provided to services.

Hence, the present invention provides at least one improvement with respect to the discussion above, which improvement is accomplished according to a first embodiment of the invention directed to a method in a wireless communication system for allocating communication of one or several services to at least one of several available frequency spectrum resources. The method is performed by a radio resource management arrangement in a wireless communication network of the wireless communication system. The method comprises the steps of categorizing said available frequency spectrum resources with respect to volatility, where the volatility, V, describes reliability of a frequency spectrum resource to be available and usable by the wireless communication system, categorizing said one or several services with respect to compressibility, where the compressibility, C, of a service corresponds to a ratio of maximum bit rate (MBR) to guaranteed bit rate (GBR) of the service and assigning said one or several services to the available frequency spectrum resources such that compressible services are assigned to volatile spectrum resources.

The services may be assigned to the available spectrum resources in a decreasing order, such that services of higher compressibility are assigned to spectrum resources with higher volatility and services of lower compressibility are assigned to spectrum resources with lower volatility. For example, a first service with a high compressibility may be assigned to a first spectrum resource with a high volatility, whereas a second service with a lower compressibility is assigned to a second spectrum resource with a low volatility.

Possible uncompressible services may be assigned to non-volatile spectrum resources.

The services may be assigned to the available spectrum resources based on the properties of a single service. The services may e.g. be assigned to one or several volatile spectrum resources if the single service is compressible or the services may e.g. be assigned to one or several non-volatile spectrum resource if the single service is uncompressible, though other possibilities are conceivable.

The services may be assigned to the available spectrum resources based on the single joint compressibility of the services. The services may e.g. be assigned to one or several volatile spectrum resources if the joint compressibility of the services is compressible or the services may e.g. be assigned to one or several non-volatile spectrum resource if the single service is uncompressible, though other possibilities are conceivable.

One or several services may be categorized such that sub-flows of the services are categorized with respect to compressibility. One or several services may then be assigned to the available spectrum resources such that compressible sub-flows of the services are assigned to one or several volatile spectrum resources. Uncompressible sub-flows may e.g. be assigned to one or several non-volatile spectrum resources. Sub-flows may e.g. transport different parts of data within the service data flow, which can differ in their relevance and characteristics. Sub-flows can be e.g. discriminated by fields in headers of the data packets, such as packet type fields, protocol type fields, port number fields, address fields, type of service fields, or specified label fields.

In addition, the present invention provides at least one improvement with respect to the discussion above, which improvement is accomplished according to a second embodiment of the invention directed to a Radio Resource Management arrangement configured to be operative in a wireless communication network of a wireless communication system and to operatively allocate communication of one or several services to at least one of several available frequency spectrum resources. The Radio Resource Management arrangement is further configured to operatively categorize said available frequency spectrum resources with respect to volatility, where the volatility, V, describes reliability of a frequency spectrum resource to be available and usable by the wireless communication system, and to categorize said one or several services with respect to compressibility, where the compressibility, C, of a service corresponds to a ratio of maximum bit rate (MBR) to guaranteed bit rate (GBR) of the service,

and to assign said one or several services to the available frequency spectrum resources such that compressible services are assigned to volatile spectrum resources.

The Radio Resource Management arrangement may be further configured to operatively assign the services to the available spectrum resources in a decreasing order, such that services of higher compressibility are assigned to spectrum resources with higher volatility and services of lower compressibility are assigned to spectrum resources with lower volatility.

The Radio Resource Management arrangement may be further configured to operatively assign possible uncompressible services to non-volatile spectrum resources.

The Radio Resource Management arrangement may be further configured to operatively assign said several services to the available spectrum resources based on the properties of a single service. The services may e.g. be assigned to one or several volatile spectrum resources if the single service is compressible or the services may e.g. be assigned to one or several non-volatile spectrum resource if the single service is uncompressible, though other possibilities are conceivable.

The Radio Resource Management arrangement may be further configured to operatively assign said several services to the available spectrum resources based on the single joint compressibility of the services. The services may e.g. be assigned to one or several volatile spectrum resources if the joint compressibility of the services is compressible or the services may e.g. be assigned to one or several non-volatile spectrum resource if the single service is uncompressible, though other possibilities are conceivable.

The Radio Resource Management arrangement may be further configured to operatively categorize said one or several services such that sub-flows of the services are categorized with respect to compressibility, and to assign said one or several services to the available spectrum resources such that compressible sub-flows of the services are assigned to volatile spectrum resources. Uncompressible sub-flows may e.g. be assigned to one or several non-volatile spectrum resources.

Further advantages of the present invention and embodiments thereof will appear from the following detailed description of the invention.

It should be emphasized that the term "comprises/comprising" when used in this specification is taken to specify the presence of stated features, integers, steps or components, but does not preclude the presence or addition of one or more other features, integers, steps, components or groups thereof.

It should also be emphasised that the steps of the exemplifying methods described herein must not necessarily be executed in the order in which they appear. In addition, embodiments of the exemplifying methods described herein may comprise more or less steps without departing from the scope of the present invention.

## BRIEF DESCRIPTION OF THE DRAWINGS

Fig. 1a    is a schematic illustration of frequency spectrum resources F1-F4 and their management in a spectrum-on-demand system.

Fig. 1b    is a first schematically illustrated example of an allocation of services Se0, Se1, Se2, Se3 to frequency spectrum resources F1-F4 in a spectrum-on-demand system according to an embodiment of the present invention,

Fig. 1c    is a second schematically illustrated example of an allocation of services Se0, Se1, Se2, Se3 to frequency spectrum resources F1-F4 in a spectrum-on-demand system according to an embodiment of the present invention,

Fig. 2a    is a schematic illustration of an exemplifying wireless communication system 100 according to a first embodiment of the present invention.

Fig. 2b    is a schematic illustration of an exemplifying wireless communication system 200 according to a second embodiment of the present invention.

Fig. 2c    is a schematic illustration of an exemplifying wireless communication system 300 according to a third embodiment of the present invention.

Fig. 3    is a schematic flowchart illustrating the operation of an embodiment of the present invention.

## DETAILED DESCRIPTION OF EMBODIMENTS

### STRUCTURE OF EMBODIMENTS

#### A First Exemplifying Communication System

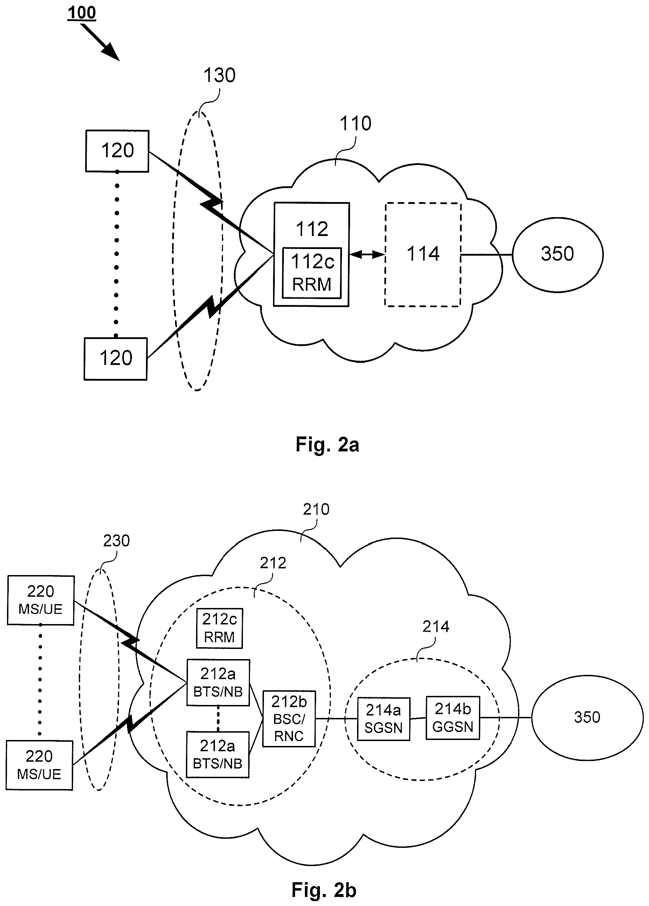

Fig. 2a is a schematic illustration of an exemplifying wireless communication system 100 according to a first embodiment of the present invention. The wireless communication system 100 may e.g. be a cellular or a non-cellular communication system.

As can be seen in Fig. 2a, the communication system 100 comprises a plurality of user devices 120 and a wireless communication network 110, which in turn comprises at least one wireless access arrangement 112 as will be further described below.

It is preferred that the user devices 120 are mobile wireless terminals configured to operatively communicate user data with the wireless access arrangement 112 via an air interface 130. Various mobile devices of this kind are well known *per se* to those skilled in the art and they need no detailed description as such. Well known examples are cell phones or similar according to the standards of the 3rd Generation Partnership Project (3GPP, see e.g. www.3gpp.org) or similar, or laptop computers or similar provided with communication ability according to the standards of the 3GPP or similar or the IEEE 802.11 or IEEE 802.16 or similar.

It is further preferred that the wireless access arrangement 112 in Fig. 2a comprises a base station arrangement or a similar wireless access node arrangement. The wireless access arrangement 112 may comprise further components, e.g. for controlling a plurality of base stations or similar. As already indicated, the wireless access arrangement 112 is preferably configured to communicate user data with one or several user devices 120 via the air interface 130. Various wireless access arrangements such as the wireless access arrangement 112 or similar are well known *per se* to those skilled in the art and they need no detailed description as such.

In addition to the known features of such systems as the system 100 it should be emphasised that the system 100 is configured to assign one or several services provided by the system 100 to various available spectrum resources such that compressible services are assigned to volatile spectrum resources, as will be elaborated in more detail later when discussing the operation of embodiments of the invention. It is preferred that possible uncompressible services are assigned to non-volatile spectrum resources. However, certain embodiments may assign uncompressible services to volatile spectrum resources.

It is particularly preferred that the access arrangement 112 of the system 100 is configured to perform this allocation. More particularly, the allocation may be performed by a Radio Resource Management (RRM) arrangement 112c in the access arrangement 112. The RRM 112c is preferably implemented by means of software and/or hardware, and it may e.g. be a separate unit and/or it may be implemented in a base station or similar and/or a base station controller or similar of the wireless access arrangement 112. The assignment of services to spectrum resources will be elaborated later in connection with the description of the *operation of embodiments* of the invention.

To enable the use of a different spectrum resources it is preferred that transceivers or similar of the user devices 120 and the wireless access arrangement 112 are configured so as to be able to transmit and receive user data by using different spectrum resources. This may be accomplished by means of a single transceiver configured to operate over all the spectrum resources in question and/or by means of a plurality of transceivers each configured to operate over a single or a few of the spectrum resources in question.

It should also be added that the wireless communication network 110 in Fig. 2a may comprise a core network arrangement 114. The core arrangement 114 may e.g. comprise a core node arrangement comprising one or several nodes. Indeed, some examples may have the RRM 112 partly or fully implemented in the core network 114. The core network arrangement 114 is preferably configured to operatively act as an interface between the wireless access arrangement 112 and various external data networks or similar, e.g. such as a Packet Data Network (PDN) 350 or similar. The Internet is a well known example of a PDN.

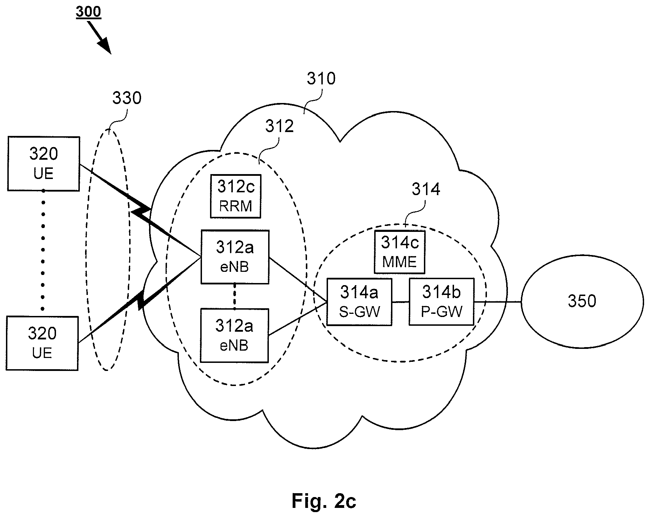

The wireless access arrangement 112 and the core network arrangement 114 are shown as separate units in Fig. 2, which may be true for certain examples of the present invention. However, other examples may have these arrangements 112, 114 fully or at least partly arranged in the same physical and/or logical unit or units.

*A Second Exemplifying Communication System*

The attention is now directed to another exemplifying wireless communication system 200 according to a second embodiment of the present invention, as schematically illustrated in Fig. 2b. It is preferred that the system 200 is a cellular communication system, e.g. according to the Global System for Mobile communications (GSM) or the General Packet Radio Service (GPRS) as defined by the 3GPP.

As can be seen in Fig. 2b, the communication system 200 comprises a plurality of user devices 220 or similar and a wireless communication network 210. The wireless communication network 210 comprises a radio access network 212 and a core network 214. The observant reader realises that the system 200 in Fig. 2b is a specific example of the system 100 in Fig. 2a. Thus, the user devices 220 correspond to the user devices 120, the communication network 210 corresponds to the communication network 110, the radio access network 212 correspond to the wireless access arrangement 112 and the core network 214 correspond to the core network arrangement 114.

The structure and operation of a communication system such as the exemplifying system 200 in Fig. 2b are well known *per se* to those skilled in the art and they need no detailed explanation. However, a brief overview is provided below.

It is preferred that the user devices 220 are Mobile Stations (MS) or User Equipments (UE) as defined by the 3GPP, or similar devices with a similar function. Such devices are well known *per se* to those skilled in the art and they need no detailed description as such.

It is also preferred that the radio access network 212 comprises one or several base stations 212a or similar radio access arrangements, e.g. Base Transceiver Stations (BTS) or NodeB (NB) or similar as defined by the 3GPP. Preferably the base stations 212a are configured to operatively communicate user data with one or several user devices 220 via an air interface 230. Radio access arrangements such as the base stations 212a are well known *per se* to those skilled in the art and they do not need any detailed description as such.

It is further preferred that the radio access network 212 comprises one or several base station controller arrangement 212b or similar. The base station controller arrangement 212b is preferably configured to operatively control the radio resources of a group of base stations 212a. The base station controller arrangement 212b in Fig. 2b may e.g. be a Base Station Controller (BSC) and/or a Radio Network Controller (RNC) or similar as defined by the 3GPP. Various base station controller arrangements such as the controller 212b in Fig. 2b are well known *per se* to those skilled in the art and it needs no detailed description as such.

In addition, the system 200 comprises a Radio Resource Management (RRM) arrangement 212c that is configured to assign one or several services provided by the system 200 to various available spectrum resources such that compressible services are assigned to volatile spectrum resources. It is preferred that possible uncompressible services are assigned to non-volatile spectrum resources. However, certain embodiments may assign uncompressible services to volatile spectrum resources. This will be elaborated later in connection with the description of the *operation of embodiments* of the invention. The RRM 212c is preferably implemented in the radio access network 212 by means of software and/or hardware. The RRM 212c may e.g. be a separate unit and/or it may be implemented in a base station 212a or similar and/or in a base station controller 212b or similar. Some examples may have the RRM 212c partly or fully implemented in the core network 214.

The RRM 212c may e.g. be configured to operatively manage the transmission capacity of one or several base stations 212a, e.g. so as to acquiring or releasing secondary spectrum resources. Similarly, the RRM 212c may additionally or alternatively be configured to operatively manage the allocation of services, e.g. comprising the capability to allocate different services to different spectrum resources. For example, the services provided by the system 210 to a user device 220 may be allocated by the RRM 212c to different frequency spectrum resources. Each particular service may e.g. be allocated a particular frequency spectrum resources and/or a particular service may be allocated such that it uses a plurality of frequency spectrum resources.

The user devices 220 are preferably configured to operate in a corresponding manner, e.g. so as to occupy or release secondary spectrum resources and additionally or alternatively to allocate different services to different spectrum resources.

It is also preferred that the core network 214 in Fig. 2b comprises a Serving Node 214a and a Gateway Node 214b or similar core network node arrangements. The Serving Node may e.g. be a Serving GPRS Support Node (SGSN) and the Gateway Node may e.g. be a Gateway GPRS Support Node (GGSN) as is well known to those skilled in the art. In the exemplifying Fig. 2b it can be seen that the Gateway Node 214b operates at one end of the core network 214 as an interface between the core network 214 and various external data networks 350, *e.g.* such as a Packet Data Network (PDN) 350. The Internet is a well known example of a PDN. At another end of the core network 214 the Serving Node 214a operates as an interface between the core network 214 and at least one radio access network 212. The Serving Node 214a and the Gateway Node 214b are shown in Fig. 2b as separate units. However, other examples may have the Serving Node 214a and the Gateway Node 214b fully or at least partly arranged in the same physical and/or logical unit or units.

*A Third Exemplifying Communication System*

The attention is now directed to an exemplifying wireless communication system 300 according to an example of the present invention, as schematically illustrated in Fig. 2c. It is preferred that the system 200 is a cellular communication system, e.g. according to the Universal Mobile Telecommunication System (UMTS) as defined by the 3GPP, or rather enhancements of the UMTS such as the Long Term Evolution (LTE) or similar.

As can be seen in Fig. 2c the communication system 300 comprises a plurality of user devices 320 or similar and a wireless communication network 310. The wireless communication network 310 comprises a radio access network arrangement 312 and a core network arrangement 314. The observant reader realises that the system 300 in Fig. 2c is a specific example of the system 100 in Fig. 2a. Thus, the user devices 320 correspond to the user devices 120, the communication network 310 corresponds to the communication network 110, the radio access network 312 correspond to the wireless access arrangement 112 and the core network 314 correspond to the core network arrangement 114. The system 300 in Fig. 2c is similar to the system 200 in Fig. 2b, however there is no base station controller arrangement 212b or similar in the radio access network arrangement 312 of the system 300.

The structure and operation of communication systems such as the exemplifying system 300 in Fig. 2c are well known *per se* to those skilled in the art and they need no detailed explanation. However, a brief overview is provided below.

In case of an LTE-system then the core network 314 corresponds to the Evolved Packet Core (EPC), whereas the radio access network 312 corresponds to the Evolved UMTS Terrestrial Radio Access Network (E-UTRAN).

In addition, in case of an LTE-system, it follows that the user devices 320 are cell phones such as User Equipments (UE) or similar devices with similar functions. Thus the devices 320 are the same or similar as the devices 220 described above with reference to Fig. 2b.

In case of an LTE-system it also follows that the radio access network 312 comprises a plurality of base stations 312a in the form of enhanced NodeB (eNB) or similar as defined by the 3GPP. The eNB 312a is similar to the NB 212a described above with reference to Fig. 2b. However, as mentioned above, there is no base station controller 212b in the radio access network 312. Instead, the radio functionality or similar of the base station controller 212b in system 200 is distributed and implemented in each eNB 320 of the system 300.

As can be seen in Fig. 2c it is preferred that the radio access network 312 comprises a Radio Resource Management (RRM) arrangement 312c. The RRM 312c is preferably configured in the same or similar manner as the RRM 212c of the radio access network 212 in Fig. 2b. In particular, it is preferred that the RRM 321c is configured to assign one or several services provided by the system 200 to various available spectrum resources such that compressible services are assigned to volatile spectrum resources. It is preferred that possible uncompressible services are assigned to non-volatile spectrum resources. However, certain embodiments may assign uncompressible services to volatile spectrum resources. The RRM 212c is preferably implemented in the radio access network 212 by means of software and/or hardware. The RRM 212c may e.g. be a separate unit and/or it may be implemented in a base station 212a or similar and/or in a base station controller 212b or similar. However, this does not preclude that some examples have the RRM312c partly or fully implemented in the core network 314.

In addition, in case of an LTE-system, the EPC 314 comprises at least one Serving Gateway 314a (S-GW) and at least one PDN Gateway (P-GW) 314b and at least one Mobility Management Entity (MME) 314c. The main task of the S-GW 314a is to tunnel user-data between a P-GW 314b and an eNB 312a. The P-GW 314b is the interface between the internal IP network of the EPC 314 and various external Packet Data Networks (PDN) 350, e.g. various IP networks such as the Internet or similar. It may be added that a S-GW and a P-GW can be combined and collocated in the same or neighbouring hardware as a matter of implementation for vendors of core networks. The main task of the MME 314c is to manage the data bearers for services within the EPC, and provide mobility management and security functions like authentication for user devices.

The above described user devices 120, 220, 320 and/or the wireless access arrangements 112, 212, 312 and/or the core networks 114, 214, 314 acting as an interface between the access network arrangements and various external data networks may, without departing from the present invention, have other configurations departing from those described above.

*OPERATION OF EMBODIMENTS*

*Overview of the operation of certain embodiments*

In embodiments of the present invention different spectrum resources are allocated to user devices 120, 220, 320 of a wireless communication system 100, 200, 300 such that the likelihood of a user device 120, 220, 320 not achieving the minimum guaranteed service is minimized. To that end, services provided to a user device 120, 220, 320 are categorized according to the amount of *compressibility* of the service in question. Further, the spectrum resources available for communication with the user device 120, 220, 320 are categorized according to the *volatility* of the spectrum resources in question. The services are then allocated to the available spectrum resources such that compressible services are allocated to volatile spectrum resources. This will be further elaborated below.

The services provided by a system 100, 200, 300 to a user device 210, 220, 320 can be categorized according to their elasticity. The elasticity can be understood as the *compressibility* of the service (typically to a lower but still sufficient performance), or in other words as the sensitivity towards variations in the spectrum resources that may be assigned to the service. Here, the expression spectrum resources should preferably be interpreted in a broad sense as generally defining the transmission capacity provided or allocated for a service.

A service may, in accordance with well known definitions, be described by the following requirements, which also is in accordance with the 3GPP definitions:

- Maximum bit rate (MBR)
- Guaranteed bit rate (GBR)

Given the above, the compressibility of a service may e.g. be described as:

$$C = MBR / GBR \tag{1}$$

It is preferred that the variable C relates to the compressibility of a service in the following manner:

$C \approx 1$ : uncompressible service, MBR $\approx$ GBR
$C \gg 1$ : compressible service, MBR $\gg$ GBR
$C = \infty$ : non-GBR service, GBR = 0

A compressible service may e.g. have a variable $C$ that is above 50, or above 100, or above 200, or above 400, or above 800, or above 1000, or above 1500, or above 2000, or above 3000, or above 4000, or above 6000, or above 8000, or above 10,000, or above 15,000, or above 20,000 or even higher. Other services may be considered as uncompressible.

In 3GPP the GBR and MBR are used for guaranteed-bit-rate services/bearers. In addition there are non-GBR or best-effort services/bearers without an assigned GBR value. This can be described as a GBR service/bearer with a GBR of 0 kb/s.

In addition, the spectrum resources available for wireless transmission between a user device 120, 220, 320 and a wireless access arrangement 112, 212, 312 over the air interface 130, 230, 330 may be assigned a *volatility V.* The volatility describes the reliability of the resource to be available and usable by the communication system 100, 200, 300. There are many ways of determining the volatility. It may e.g. depend on the type of usage of a particular spectrum resource, its size (e.g. bandwidth), how the spectrum resource is shared among the users of the resource etc. In addition or alternatively, the volatility may be based on variations of spectrum availability experienced in the past and/or it may be based on information received from a spectrum usage database or some other information source (e.g. maintained by a regulator) and/or it may e.g. depend on the number and type of other systems that have denoted interest in using the spectrum resource, etc.

For the purpose of the examples described herein the volatility of each available spectrum resource may be considered as a pre-determined value. The values may be updated occasionally. However, even if pre-determined volatility values may be sufficient in certain examples it should be understood that the invention is not limited to pre-determined volatility values. On the contrary, a skilled person having the benefit of this disclosure realises that the volatility of the available spectrum resources may be determined in many other ways, e.g. as indicated above.

Before we proceed it should be added that the volatility of a spectrum resource may be confined to a certain geographic region or to certain geographical regions or similar. Thus, the same spectrum resource may e.g. have different volatility values in different geographic regions.

In view of the above we may assume that the spectrum resources available to an example of the present invention have the volatility values "involatile", "low", "medium" or "high". It should be mentioned that a typical example of an "involatile" spectrum resource is a dedicated spectrum resource exclusively licensed to a user to be used for his communication system(s). For example, today's 2G/3G cellular communication systems use such "involatile" spectrum resources.

As indicated above with reference to Fig. 2a-2c, the allocation of services to frequency spectrum resources is preferably performed by a wireless access arrangement 112, 212, 312 and/or by an RRM 212c, 312c or similar in the wireless access arrangement 112, 212, 312. As also indicated above, the purpose of the allocation is to assign services to the available frequency resources such that the end users obtain highest performance, the highest capacity is achieved and the services obtain their required quality. As indicated at the beginning of this overview section, to achieve this for a system with available spectrum resources of different volatility the following approach is preferred:

- Categorize spectrum resources according to volatility

- Categorize services according to compressibility

- The larger the volatility of spectrum resources, only assign services with larger compressibility.

An example of the present invention may e.g. be based on the following decision table (see table 1 below) to be applied for each spectrum resource:

| If volatility $V$ = "involatile" | Assign any service $C \leq c1$ |
|---|---|
| If volatility $V$ = *"low"* | Assign only services with compressibility $C > c1$ |
| If volatility $V$ = *"medium"* | Assign only services with compressibility $C > c2$ |
| If volatility $V$ = *"high"* | Assign only services with compressibility $C > c3$ |

wherein $c1 < c2 < c3$.

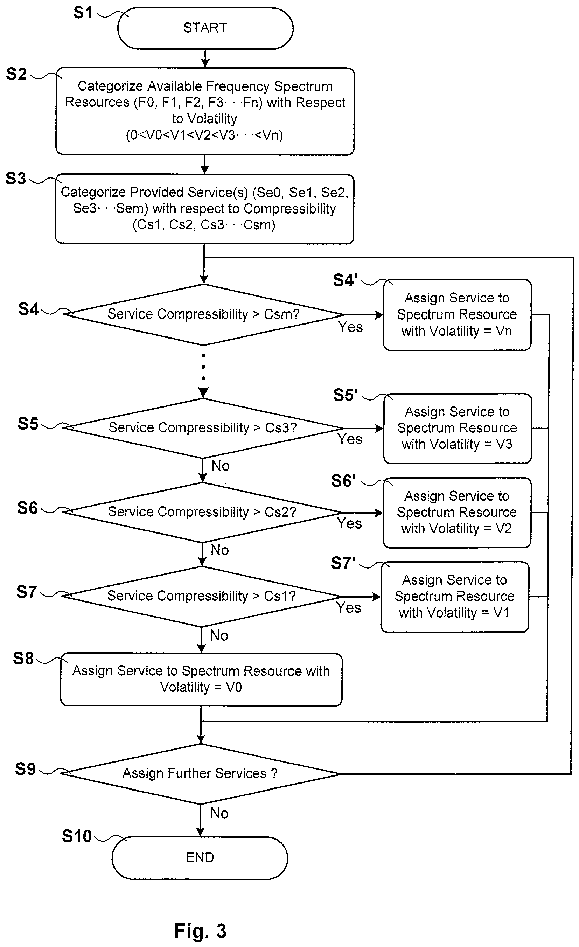

It is preferred that the allocation algorithm assigns the services to spectrum resources such that services are in decreasing order of compressibility assigned to spectrum resources in decreasing order of compressibility, see Fig. 3. In other words, services of higher compressibility are assigned to spectrum resources with higher volatility and services of lower compressibility are assigned to spectrum resources with lower volatility.

This ensures that the spectrum resources with the lowest volatility will be reserved for the services with the lowest compressibility. This ensures that the largest amount of users is likely to achieve the required service level.

Embodiments of the present invention may be combined with other service prioritization methods. For example, different services can be assigned a certain service priority, pre-emption priority, or a user priority (e.g. gold/silver/bronze users). In this case it may be that a gold user should see a different threshold for a certain service (be rather admitted to less volatile resources) than the same service of a bronze user. Also a service with a higher pre-emption priority should be rather put to a more volatile resource than another service with the same compressibility but a lower pre-emption priority. A person skilled in the art having the benefit of this disclosure realises that this can be achieved by having different V-C assignment tables or by scaling C values or V thresholds. It is easy for someone skilled in the art to extend our method accordingly.

In case a user has multiple services different approaches may be applied:

- Each service is independently assigned to spectrum resources according to the above decision table. However this may require that the user device 120, 220, 320 is active on multiple spectrum resources. This may have several disadvantages for the user device, e.g. higher peak-to-average transmit power, larger energy consumption of the battery, possibly local interference between simultaneous transmission on different spectrum resources, higher capability requirement on the user device.
- The assignment of services to spectrum resources is based on the properties of only one single service. This can be the service which has been assigned a highest priority value. Alternatively, it can be the service with the highest requirement, e.g. largest GBR value and or MBR value. Alternatively, it can be the service with the lowest compressibility. Here, it is preferred that all the services are assigned to one or several volatile spectrum resources if the single service is compressible.
- The assignment of services to spectrum resources is based on a single joint compressibility of all services. The compressibility may e.g. be described for multiple services $i$ as:

$$C = SUM(MBR\_i) / SUM(GBR\_i) \qquad (2)$$

If user devices 120, 220, 320 and the wireless access arrangement 112, 212, 312 are capable of simultaneously using multiple spectrum resources a service can be split on the spectrum resources. This could be e.g. applied to partition scalable video streams into the base layer part and the enhancement layer part on different sub-flows. In this case the same basic idea can be applied. However, it is not applied for the service data flow but rather to sub-flows of the service data flow.

For example, a service data flow with requirements *MBR* and *GBR* can be split into two sub-flows which could get the sub-flow requirements:

Sub-flow 1: *GBR_1 = GBR, MBR_1 = GBR*
Sub-flow 2: *GBR_2 = 0, MBR_2 = MBR-GBR*

Note that sub-flow 1 contains the uncompressible part of the service data flow which already fulfils the service requirements. Sub-flow 2 is fully compressible. However, the form could be partitioned into sub-flows in many forms (e.g. with a maximum allowed value for GBR). Typically the partitioning is such that for j sub-flows

*SUM (GBR_j) = GBR,*
*SUM (MBR_j) = MBR.*

The assignment is preferably done per sub-flow.

Fig. 1b is a exemplifying schematic illustration of an exemplifying allocation of services Se0, Se1, Se2 and Se3 to frequency spectrum resources F1-F4 in a communication system according to an embodiment of the present invention, e.g. such in any one of the systems 100, 200 or 300 described above. The spectrum resources F1-F4 may e.g. be the same or similar to as those described in the Background section with reference to Fig. 1a.

In Fig. 1b the communication system (e.g. 100, 200 or 300) has determined the volatility of the spectrum resources F1-F4 and the compressibility of the services S0-S3 such that service Se0 and a part (e.g. a sub-flow) of service Se1 are assigned to resource F1, whereas another part of service Se1 is assigned to resource F4. Service Se2 is in the same manner assigned to resource F3 and service Se3 is assigned to resource F4.

Fig. 1c shows the same or similar spectrum resources F1-F4 and the same or similar services S0-S3 as in Fig. 1b. However, the volatility of the resources F1-F4 and/or the compressibility of the services S0-S3 has changed such that the system (e.g. 100, 200 or 300) has assigned service Se0 to resource F1 and service Se1 to resource F2, whereas services Se2 and Se3 are assigned to resource F3.

Naturally, the system only assigns services to spectrum resources that are currently available. Thus, the availability of the spectrum resources F1-F4 in Fig. 1b must not necessarily be the same in Fig. 1c. For example, resource F2 may be available in the second example but not in the first example. A reassignment of one or several services may occur if the availability of the spectrum resources changes. For example, if a new spectrum resource becomes available or if an exiting spectrum resource becomes unavailable, or if an existing spectrum resource becomes more or less available, e.g. more or less volatile. A reassignment may also occur if one or more services change their compressibility, e.g. become more or less compressible.

*Specific operations of embodiments*

The attention is now directed to a schematic flowchart shown in Fig. 3, which illustrates the operation of an exemplifying embodiment of the present invention. The operation is preferably performed by a radio access arrangement 112, 212, 312 or by a possible RRM 112c, 212c, 312c arranged in said access arrangement 112, 212, 312. However, this does not preclude that the operation can be at least partly performed by the core network arrangement 114, 214, 314 being a part of the communication system 100, 200, 300 to which the access arrangement 112, 212, 312 in question belongs.

The steps of the exemplifying operation illustrated by the flowchart in Fig. 3 will now be discussed in more detail below.

In a first step S1 it is preferred that a wireless communication system 100, 200, 300 is activated. It is also preferred that a plurality of user devices 120, 220, 320 of the communication system 100, 200, 300 in question is within the range of at least one wireless access arrangement 112, 212, 312 in the communication system 100, 200, 300. Moreover, in the first step S1 it is also assumed that at least one and possibly a plurality of services Se1-Sem is provided by the system 100, 200, 300 for at least one user device 120, 220, 320 and that at least two and possibly more frequency spectrum resources F0-Fn are available for communicating the provided services Se1-Sem between the system 100, 200, 300 and the user device 120, 220, 320 in question over an air interface 130, 230, 330. It is also assumed that the services Se1-Sem can be assigned to the spectrum resources F0-Fn on demand, i.e. a spectrum-on-demand system is assumed.

In a second step S2 it is preferred that the available frequency spectrum resources F0-Fn are categorized according to the volatility of the resource in question. We may e.g. assume that the volatilities are categorized as follows (see table 2 below):

| Frequency Spectrum Resource | F0 | F1 | F2 | F3 | ... | Fn |
|---|---|---|---|---|---|---|
| Volatility | V0 | V1 | V2 | V3 | ... | Vn |

Here it is assumed that there are at least four available frequency spectrum resources F0-F3. However, there may be less or additional frequency spectrum resources, e.g. from two(2) up to a total of n such resources. As can be seen in the above table, a volatility V0-Vn has been determined for each resource F0-Fn respectively.

We may assume that the volatilities relate to each other in the following manner:

$$0 \leq V0 < V1 < V2 < V3 \cdots < Vn$$

In other words, the volatility Vn is the highest and the volatility V0 is the lowest.

In a third step Se3 it is preferred that the provided services Se0, Se1, Se2, Se3 are categorized according to the amount of *compressibility* of the service in question. We may e.g. assume that the services are categorized as follows (see table 3 below):

| Service | Se0 | Se1 | Se2 | Se3 | ... | Sem |
|---|---|---|---|---|---|---|
| Compressibility | Cs0 | Cs1 | Cs2 | Cs3 | ... | Csm |

Here, it is assumed that four services Se0-Se3 are provided. However, there may be less or additional services, e.g. from two(2) up to a total of m such services. As can be seen in the above table, compressibility Cs0-Csm has been determined for each service Se0-Sem respectively.

We may also assume that the compressibility Cs0-Csm of the services Se0-Sem are of an increasing order.

In other words, the compressibility Cs0 of the service Se0 is the lowest and compressibility Csm of the service Sem is the highest. The compressibility Cs0 may even be 1, i.e. the service Se0 may be uncompressible as indicated by MBR/GBR≈1 in expression 1 above. It follows that the compressibility Csm of the service Sem is the highest. The compressibility Csm may even be ∞, i.e. the service Sem may be fully compressible as indicated by GBR=0 in expression 1 above

In a fourth step S4 it is preferably determined whether the service compressibility of a service exceeds a first *highest* compressibility threshold Csm, e.g. Csm=oo. If that is the case it is preferred that the service in question is assigned in step S4' to a spectrum resource Vn with the highest volatility. The method will then proceed to step S9 where it is determined whether another service should be assigned to a spectrum resource. If that is the case then the method will start over at step S4. If no other service should be assigned then the method will end at step S10. However, if the compressibility of the first service does not exceed the first highest compressibility threshold Cm it is preferred that the method proceeds to the fifth step S5.

Before we proceed to the fifth step S5 it should be clarified that - as indicated by the dotted arrow in Fig. 3 - there may be further thresholds in respect to which it is determined whether the service compressibility of a service exceeds the threshold in question in the same or similar manner as described above with reference to steps S4 and S4'.

In a fifth step S5 it is preferred to determine whether the service compressibility of a first service exceeds a *high* compressibility threshold Cs3. This corresponds to the situation where $V="high"$ and $C>c3$ in decision table 1 above. If the compressibility exceeds threshold C3 it is preferred that the service in question is assigned to a spectrum resource V3 with a high volatility in step S5'. The method will then proceed to step S9 where it is determined whether another services should be assigned to a spectrum resource. If that is the case then the method will start over at step S4. If no other service should be assigned then the method will end at step S10. However, if the compressibility of the service does not exceed the *high* compressibility threshold Cs3 it is preferred that the method proceeds to the sixth step S6.

In a sixth step S6 it is preferred to determine whether the service compressibility of a service exceeds a *medium* compressibility threshold Cs2. This corresponds to the situation where $V="medium"$ and $C>c2$ in decision table 1 above. If the compressibility exceeds threshold Cs2 it is preferred that the service in question is assigned to a spectrum resource V2 with a medium volatility in step S6'. The method will then proceed to step S9 where it is determined whether further services should be assigned to a spectrum resource. If that is the case then the method will start over at step S4. If no further service should be assigned then the method will end at step S10. However, if the compressibility of the service does not exceed the *medium* compressibility threshold Cs2 it is preferred that the method proceeds to the seventh step S7.

In a seventh step S7 it is preferred to determine whether the service compressibility of a service exceeds a *low* compressibility threshold Cs1. This corresponds to the situation where $V="low"$and $C>c1$ in decision table 1 above. If the compressibility exceeds threshold Cs1 it is preferred that the service in question is assigned to a spectrum resource V1 with a low volatility in step S7'. The method will then proceed to step S9 where it is determined whether further services should be assigned to a spectrum resource. If that is the case then the method will start over at step S4. If no further service should be assigned then the method will end at step S10. However, if the compressibility of the service does not exceed the *low* compressibility threshold Cs1 it is preferred that the method proceeds to the eighth step S8.

In an eighth step S8 it is preferred that services with compressibility below said *low* compressibility defined by threshold Cs1 (e.g. uncompressible services) are assigned to a spectrum resource V0 with no or negligible volatility. This corresponds to the situation where $V="involatile"$ and $C>c1$ in decision table 1 above.

The present invention has now been described with reference to exemplifying embodiments. However, the invention is not limited to the embodiments described herein. On the contrary, the full extent of the invention is only determined by the scope of the appended claims.

## Claims

1. A method in a wireless communication system (100, 200, 300) for allocating communication of one or several services (Se0, Se1, Se2, Se3) to at least one of several available frequency spectrum resources (F1, F2, F3, F4), wherein the method is performed by a Radio Resource Management arrangement (112c, 212c, 312c) in a wireless communication network (110, 210, 310) of the wireless communication system (100, 200, 300), and wherein the method comprises the steps of:

   - categorizing each of said available frequency spectrum resources (F1, F2, F3, F4) with respect to volatility, wherein the volatility, V, describes reliability of a frequency spectrum resource to be available and usable by the wireless communication system (100, 200, 300);
   - categorizing each of said one or several services (Se0, Se1, Se2, Se3) with respect to compressibility, wherein the compressibility, C, of a service corresponds to a ratio of maximum bit rate, MBR, to guaranteed bit rate, GBR of the service, and wherein a service having $C>>1$ is categorised as compressible; and

- assigning said one or several services (Se0, Se1, Se2, Se3) to the available frequency spectrum resources (F1, F2, F3, F4) such that compressible services are assigned to volatile spectrum resources.

2. The method according to claim 1, comprising the additional steps of:
   assigning the one or several services (Se0, Se1, Se2, Se3) to the available frequency spectrum resources (F1, F2, F3, F4) in a decreasing order of the compressibility such that services of higher compressibility are assigned to spectrum resources with higher volatility and services of lower compressibility are assigned to spectrum resources with lower volatility.

3. The method according to any one of claims 1 and 2, comprising the additional steps of: assigning possible uncompressible services to involatile spectrum resources, wherein a service having $C \approx 1$ is categorised as uncompressible.

4. The method according to any one of claims 1, 2, and 3, comprising the additional steps of: assigning said one or several services (Se0, Se1, Se2, Se3) to the available frequency spectrum resources (F1, F2, F3, F4) based on the properties of a single service of said one or several services (Se0, Se1, Se2, Se3) such that the one or several services (Se0, Se1, Se2, Se3) are assigned to the volatile spectrum resources if the single service is compressible.

5. The method according to any one of claims 1, 2, and 3, comprising the additional steps of: assigning said one or several services (Se0, Se1, Se2, Se3) to the available frequency spectrum resources (F1, F2, F3, F4) based on single joint compressibility of the services (Se0, Se1, Se2, Se3).

6. The method according to any one of claims 1, 2, 3, 4, and 5, comprising the additional steps of:

   - categorizing said one or several services (Se0, Se1, Se2, Se3) such that sub-flows of the one or several services (Se0, Se1, Se2, Se3) are categorized with respect to compressibility, and
   - assigning said one or several services (Se0, Se1, Se2, Se3) to the available frequency spectrum resources (F1, F2, F3, F4) such that compressible sub-flows of the one or several services (Se0, Se1, Se2, Se3) are assigned to the volatile spectrum resources.

7. A Radio Resource Management arrangement (112c, 212c, 312c) configured to be operative in a wireless communication network (110, 210, 310) of a wireless communication system (100, 200, 300) and to operatively allocate communication of one or several services (Se0, Se1, Se2, Se3) to at least one of several available frequency spectrum resources (F1, F2, F3, F4), the Radio Resource Management arrangement (112c, 212c, 312c) is further configured to operatively:

   - categorize each of said available frequency spectrum resources (F1, F2, F3, F4) with respect to volatility, wherein the volatility, V, describes reliability of a frequency spectrum resource to be available and usable by the wireless communication system (100, 200, 300);
   - categorize each of said one or several services (Se0, Se1, Se2, Se3) with respect to compressibility, wherein the compressibility, C, of a service corresponds to a ratio of maximum bit rate, MBR, to guaranteed bit rate, GBR of the service, and wherein a service having $C \gg 1$ is categorised as compressible; and
   - assign said one or several services (Se0, Se1, Se2, Se3) to the available frequency spectrum resources (F1, F2, F3, F4) such that compressible services are assigned to volatile spectrum resources.

8. The Radio Resource Management arrangement (112c, 212c, 312c) according to claim 7, wherein the Radio Resource Management arrangement (112c, 212c, 312c) is further configured to operatively assign the one or several services (Se0, Se1, Se2, Se3) to the available frequency spectrum resources (F1, F2, F3, F4) in a decreasing order of the compressibility such that services of higher compressibility are assigned to spectrum resources with higher volatility and services of lower compressibility are assigned to spectrum resources with lower volatility.

9. The Radio Resource Management arrangement (112c, 212c, 312c) according to any one of claims 7 and 8, wherein the Radio Resource Management arrangement (112c, 212c, 312c) is further configured to operatively assign possible uncompressible services to involatile spectrum resources, wherein a service having $C \approx 1$ is categorised as uncompressible.

10. The Radio Resource Management arrangement (112c, 212c, 312c) according to any one of claims 7, 8, and 9, wherein the Radio Resource Management arrangement (112c, 212c, 312c) is further configured to operatively assign said one or several services (Se0, Se1, Se2, Se3) to the available frequency spectrum resources (F1, F2, F3, F4) based on the properties of a single service of the one or several services (Se0, Se1, Se2, Se3) such that the one or several services (Se0, Se1, Se2, Se3) are assigned to the volatile spectrum resources if the single service is compressible.

11. The Radio Resource Management arrangement (112c, 212c, 312c) according to any one of claims 7, 8, and 9, wherein the Radio Resource Management arrangement (112c, 212c, 312c) is further configured to operatively assign said one or several services (Se0, Se1, Se2, Se3) to the available frequency spectrum resources (F1, F2, F3, F4) based on single joint compressibility of the services (Se0, Se1, Se2, Se3).

12. The Radio Resource Management arrangement (112c, 212c, 312c) according to any one of claims 7, 8, and 9, wherein the Radio Resource Management arrangement (112c, 212c, 312c) is further configured to operatively:

- categorize said one or several services (Se0, Se1, Se2, Se3) such that sub-flows of the one or several services (Se0, Se1, Se2, Se3) are categorized with respect to the compressibility, and
- assign said one or several services (Se0, Se1, Se2, Se3) to the available frequency spectrum resources (F1, F2, F3, F4) such that compressible sub-flows of the one or several services (Se0, Se1, Se2, Se3) are assigned to the volatile spectrum resources.

**Patentansprüche**

1. Verfahren in einem drahtlosen Kommunikationssystem (100, 200, 300) zum Zuweisen einer Kommunikation eines oder mehrerer Dienste (Se0, Se1, Se2, Se3) zu mindestens einer aus mehreren verfügbaren Frequenzspektrumressourcen (F1, F2, F3, F4), wobei das Verfahren durch eine Funkressourcenverwaltungsanordnung (112c, 212c, 312c) in einem drahtlosen Kommunikationsnetzwerk (110, 210, 310) des drahtlosen Kommunikationssystems (100, 200, 300) durchgeführt wird und wobei das Verfahren die folgenden Schritte umfasst:

- Kategorisieren jeder der verfügbaren Frequenzspektrumressourcen (F1, F2, F3, F4) in Bezug auf Volatilität, wobei die Volatilität, V, die Zuverlässigkeit einer Frequenzspektrumressource, verfügbar und von dem drahtlosen Kommunikationssystem (100, 200, 300) nutzbar zu sein, beschreibt;
- Kategorisieren jedes des einen oder der mehreren Dienste (Se0, Se1, Se2, Se3) in Bezug auf Komprimierbarkeit, wobei die Komprimierbarkeit, C, eines Dienstes einem Verhältnis von maximaler Bitrate, MBR, zu garantierter Bitrate, GBR, des Dienstes entspricht, und wobei ein Dienst mit $C \gg 1$ als komprimierbar kategorisiert wird; und
- Zuweisen des einen oder der mehreren Dienste (Se0, Se1, Se2, Se3) zu den verfügbaren Frequenzspektrumressourcen (F1, F2, F3, F4), so dass komprimierbare Dienste volatilen Spektrumressourcen zugewiesen werden.

2. Verfahren nach Anspruch 1, umfassend die folgenden zusätzlichen Schritte:
Zuweisen des einen oder der mehreren Dienste (Se0, Se1, Se2, Se3) zu den verfügbaren Frequenzspektrumressourcen (F1, F2, F3, F4) in einer absteigenden Reihenfolge der Komprimierbarkeit, so dass Dienste höherer Komprimierbarkeit Spektrumressourcen mit höherer Volatilität zugewiesen werden und Dienste niedrigerer Komprimierbarkeit Spektrumressourcen niedrigerer Volatilität zugewiesen werden.

3. Verfahren nach einem der Ansprüche 1 und 2, umfassend die folgenden zusätzlichen Schritte:
Zuweisen möglicher unkomprimierbarer Dienste zu nicht volatilen Spektrumressourcen, wobei ein Dienst mit $C \approx 1$ als unkomprimierbar kategorisiert wird.

4. Verfahren nach einem der Ansprüche 1, 2 und 3, umfassend die folgenden zusätzlichen Schritte: Zuweisen des einen oder der mehreren Dienste (Se0, Se1, Se2, Se3) zu den verfügbaren Frequenzspektrumressourcen (F1, F2, F3, F4) basierend auf den Eigenschaften eines einzelnen Dienstes aus dem einen oder den mehreren Diensten (Se0, Se1, Se2, Se3), so dass der eine oder die mehreren Dienste (Se0, Se1, Se2, Se3) den volatilen Spektrumressourcen zugewiesen werden, wenn der einzelne Dienst komprimierbar ist.

5. Verfahren nach einem der Ansprüche 1, 2, and 3, umfassend die folgenden zusätzlichen Schritte: Zuweisen des einen oder der mehreren Dienste (Se0, Se1, Se2, Se3) zu den verfügbaren Frequenzspektrumressourcen (F1, F2, F3, F4) basierend auf der einzelnen gemeinsamen Komprimierbarkeit der Dienste (Se0, Se1, Se2, Se3).

6. Verfahren nach einem der Ansprüche 1, 2, 3, 4, and 5, umfassend die folgenden zusätzlichen Schritte:

- Kategorisieren des einen oder der mehreren Dienste (Se0, Se1, Se2, Se3), so dass Teilströme des einen oder der mehreren Dienste (Se0, Se1, Se2, Se3) in Bezug auf Komprimierbarkeit kategorisiert werden, und
- Zuweisen des einen oder der mehreren Dienste (Se0, Se1, Se2, Se3) zu den verfügbaren Frequenzspektrumressourcen (F1, F2, F3, F4), so dass komprimierbare Teilströme des einen oder der mehreren Dienste (Se0, Se1, Se2, Se3) den volatilen Spektrumressourcen zugewiesen werden.

7. Funkressourcenverwaltungsanordnung (112c, 212c, 312c), die so konfiguriert ist, dass sie in einem drahtlosen Kommunikationsnetzwerk (110, 210, 310) eines drahtlosen Kommunikationssystem (100, 200, 300) in Betrieb ist und eine Kommunikation eines oder mehrerer Dienste (Se0, Se1, Se2, Se3) mindestens einer mehrerer verfügbarer Frequenzspektrumressourcen (F1, F2, F3, F4) betriebsmäßig zuweist, wobei die Funkressourcenverwaltungsanordnung (112c, 212c, 312c) ferner dazu konfiguriert ist, betriebsmäßig:

- jede der verfügbaren Frequenzspektrumressourcen (F1, F2, F3, F4) in Bezug auf Volatilität zu kategorisieren, wobei die Volatilität, V, die Zuverlässigkeit einer Frequenzspektrumressource, verfügbar und von dem drahtlosen Kommunikationssystem (100, 200, 300) nutzbar zu sein, beschreibt;
- jeden des einen oder der mehreren Dienste (Se0, Se1, Se2, Se3) in Bezug auf Komprimierbarkeit zu kategorisieren, wobei die Komprimierbarkeit, C, eines Dienstes einem Verhältnis von maximaler Bitrate, MBR, zu garantierter Bitrate, GBR, des Dienstes entspricht, und wobei ein Dienst mit $C \gg 1$ als komprimierbar kategorisiert wird; und
- den einen oder die mehreren Dienste (Se0, Se1, Se2, Se3) den verfügbaren Frequenzspektrumressourcen (F1, F2, F3, F4) zuzuweisen, so dass komprimierbare Dienste volatilen Spektrumressourcen zugewiesen werden.

8. Funkressourcenverwaltungsanordnung (112c, 212c, 312c) nach Anspruch 7, wobei die Funkressourcenverwaltungsanordnung (112c, 212c, 312c) ferner so konfiguriert ist, dass sie betriebsmäßig den einen oder die mehreren Dienste (Se0, Se1, Se2, Se3) den verfügbaren Frequenzspektrumressourcen (F1, F2, F3, F4) in einer absteigenden Reihenfolge der Komprimierbarkeit zuweist, so dass Dienste höherer Komprimierbarkeit Spektrumressourcen mit höherer Volatilität zugewiesen werden und Dienste niedrigerer Komprimierbarkeit Spektrumressourcen niedrigerer Volatilität zugewiesen werden.

9. Funkressourcenverwaltungsanordnung (112c, 212c, 312c) nach einem der Ansprüche 7 und 8, wobei die Funkressourcenverwaltungsanordnung (112c, 212c, 312c) ferner so konfiguriert ist, dass sie betriebsmäßig mögliche unkomprimierbare Dienste nicht volatilen Spektrumressourcen zuweist, wobei ein Dienst mit $C \approx 1$ als unkomprimierbar kategorisiert wird.

10. Funkressourcenverwaltungsanordnung (112c, 212c, 312c) nach einem der Ansprüche 7, 8 und 9, wobei die Funkressourcenverwaltungsanordnung (112c, 212c, 312c) ferner so konfiguriert ist, dass sie betriebsmäßig den einen oder die mehreren Dienste (Se0, Se1, Se2, Se3) den verfügbaren Frequenzspektrumressourcen (F1, F2, F3, F4) basierend auf den Eigenschaften eines einzelnen Dienstes aus dem einen oder den mehreren Diensten (Se0, Se1, Se2, Se3) zuweist, so dass der eine oder die mehreren Dienste (Se0, Se1, Se2, Se3) den volatilen Spektrumressourcen zugewiesen werden, wenn der einzelne Dienst komprimierbar ist.

11. Funkressourcenverwaltungsanordnung (112c, 212c, 312c) nach einem der Ansprüche 7, 8 und 9, wobei die Funkressourcenverwaltungsanordnung (112c, 212c, 312c) ferner so konfiguriert ist, dass sie betriebsmäßig den einen oder die mehreren Dienste (Se0, Se1, Se2, Se3) den verfügbaren Frequenzspektrumressourcen (F1, F2, F3, F4) basierend auf der einzelnen gemeinsamen Komprimierbarkeit der Dienste (Se0, Se1, Se2, Se3) zuweist.

12. Funkressourcenverwaltungsanordnung (112c, 212c, 312c) nach einem der Ansprüche 7, 8 und 9, wobei die Funkressourcenverwaltungsanordnung (112c, 212c, 312c) ferner so konfiguriert ist, dass sie betriebsmäßig:

- den einen oder die mehreren Dienste (Se0, Se1, Se2, Se3) kategorisiert, so dass Teilströme des einen oder der mehreren Dienste (Se0, Se1, Se2, Se3) in Bezug auf die Komprimierbarkeit kategorisiert werden, und
- den einen oder die mehreren Dienste (Se0, Se1, Se2, Se3) den verfügbaren Frequenzspektrumressourcen (F1, F2, F3, F4) zuweist, so dass komprimierbare Teilströme des einen oder der mehreren Dienste (Se0, Se1, Se2, Se3) den volatilen Spektrumressourcen zugewiesen werden.

**Revendications**

1. Procédé dans un système de communication sans fil (100, 200, 300) destiné à allouer la communication d'un ou plusieurs services (Se0, Se1, Se2, Se3) à au moins l'une de plusieurs ressources disponibles du spectre de fréquences (F1, F2, F3, F4), dans lequel le procédé est réalisé par un agencement (112c, 212c, 312c) de gestion de ressources radio dans un réseau de communication sans fil (110, 210, 310) du système de communication sans fil (100, 200, 300), et dans lequel le procédé comprend les étapes :

   - de catégorisation de chacune desdites ressources disponibles du spectre de fréquences (F1, F2, F3, F4) par rapport à la volatilité, dans lequel la volatilité, V, décrit la fiabilité d'une ressource du spectre de fréquences à être disponible et utilisable par le système de communication sans fil (100, 200, 300) ;
   - de catégorisation de chacun desdits un ou plusieurs services (Se0, Se1, Se2, Se3) par rapport à la compressibilité, dans lequel la compressibilité, C, d'un service correspond à un rapport entre un débit binaire maximum, MBR, et un débit binaire garanti, GBR, du service, et dans lequel un service ayant une C>>1 est catégorisé comme compressible ; et
   - d'attribution desdits un ou plusieurs services (Se0, Se1, Se2, Se3) aux ressources disponibles du spectre de fréquences (F1, F2, F3, F4) de sorte que des services compressibles sont attribués aux ressources volatiles du spectre.

2. Procédé selon la revendication 1, comprenant les étapes supplémentaires :
   d'attribution des un ou plusieurs services (Se0, Se1, Se2, Se3) aux ressources disponibles du spectre de fréquences (F1, F2, F3, F4) selon un ordre décroissant de la compressibilité de sorte que des services de compressibilité supérieure sont attribués à des ressources du spectre de volatilité supérieure et des services de compressibilité inférieure sont attribués à des ressources du spectre de volatilité inférieure.

3. Procédé selon l'une quelconque des revendications 1 et 2, comprenant les étapes supplémentaires :
   d'attribution de possibles services non compressibles à des ressources non volatiles du spectre, dans lequel un service ayant une C≈1 est catégorisé comme non compressible.

4. Procédé selon l'une quelconque des revendications 1, 2, et 3, comprenant les étapes supplémentaires : d'attribution desdits un ou plusieurs services (Se0, Se1, Se2, Se3) aux ressources disponibles du spectre de fréquences (F1, F2, F3, F4) sur la base des propriétés d'un service unique parmi lesdits un ou plusieurs services (Se0, Se1, Se2, Se3) de sorte que les un ou plusieurs services (Se0, Se1, Se2, Se3) sont attribués aux ressources volatiles du spectre si le service unique est compressible.

5. Procédé selon l'une quelconque des revendications 1, 2, et 3, comprenant les étapes supplémentaires : d'attribution desdits un ou plusieurs services (Se0, Se1, Se2, Se3) aux ressources disponibles du spectre de fréquences (F1, F2, F3, F4) sur la base d'une compressibilité conjointe unique des services (Se0, Se1, Se2, Se3).

6. Procédé selon l'une quelconque des revendications 1, 2, 3, 4, et 5, comprenant les étapes supplémentaires :

   - de catégorisation desdits un ou plusieurs services (Se0, Se1, Se2, Se3) de sorte que les sous-flux des un ou plusieurs services (Se0, Se1, Se2, Se3) sont catégorisés par rapport à la compressibilité, et
   - d'attribution desdits un ou plusieurs services (Se0, Se1, Se2, Se3) aux ressources disponibles du spectre de fréquences (F1, F2, F3, F4) de sorte que des sous-flux compressibles des un ou plusieurs services (Se0, Se1, Se2, Se3) sont attribués aux ressources volatiles du spectre.

7. Agencement (112c, 212c, 312c) de gestion de ressources radio configuré pour pouvoir fonctionner dans un réseau de communication sans fil (110, 210, 310) d'un système de communication sans fil (100, 200, 300) et pour allouer fonctionnellement la communication d'un ou plusieurs services (Se0, Se1, Se2, Se3) à au moins l'une de plusieurs ressources disponibles du spectre de fréquences (F1, F2, F3, F4), dans lequel l'agencement (112c, 212c, 312c) de gestion de ressources radio est en outre configuré pour fonctionnellement :

   - catégoriser chacune desdites ressources disponibles du spectre de fréquences (F1, F2, F3, F4) par rapport à la volatilité, dans lequel la volatilité, V, décrit la fiabilité d'une ressource du spectre de fréquences à être disponible et utilisable par le système de communication sans fil (100, 200, 300) ;
   - catégoriser chacun desdits un ou plusieurs services (Se0, Se1, Se2, Se3) par rapport à la compressibilité, dans lequel la compressibilité, C, d'un service correspond à un rapport entre un débit binaire maximum, MBR, et un débit binaire garanti, GBR, du service, et dans lequel un service ayant une C>>1 est catégorisé comme compressible ; et
- attribuer lesdits un ou plusieurs services (Se0, Se1, Se2, Se3) aux ressources disponibles du spectre de fréquences (F1, F2, F3, F4) de sorte que des services compressibles sont attribués aux ressources volatiles du spectre.

8. Agencement (112c, 212c, 312c) de gestion de ressources radio selon la revendication 7, dans lequel l'agencement (112c, 212c, 312c) de gestion de ressources radio est en outre configuré pour fonctionnellement attribuer les un ou plusieurs services (Se0, Se1, Se2, Se3) aux ressources disponibles du spectre de fréquences (F1, F2, F3, F4) selon un ordre décroissant de la compressibilité de sorte que des services de compressibilité supérieure sont attribués à des ressources du spectre de volatilité supérieure et des services de compressibilité inférieure sont attribués à des ressources du spectre de volatilité inférieure.

9. Agencement (112c, 212c, 312c) de gestion de ressources radio selon l'une quelconque des revendications 7 et 8, dans lequel l'agencement (112c, 212c, 312c) de gestion de ressources radio est en outre configuré pour fonctionnellement attribuer de possibles services non compressibles à des ressources non volatiles du spectre, dans lequel un service ayant une C≈1 est catégorisé comme non compressible.

10. Agencement (112c, 212c, 312c) de gestion de ressources radio selon l'une quelconque des revendications 7, 8 et 9, dans lequel l'agencement (112c, 212c, 312c) de gestion de ressources radio est en outre configuré pour fonctionnellement attribuer lesdits un ou plusieurs services (Se0, Se1, Se2, Se3) aux ressources disponibles du spectre de fréquences (F1, F2, F3, F4) sur la base des propriétés d'un service unique parmi lesdits un ou plusieurs services (Se0, Se1, Se2, Se3) de sorte que les un ou plusieurs services (Se0, Se1, Se2, Se3) sont attribués aux ressources volatiles du spectre si le service unique est compressible.

11. Agencement (112c, 212c, 312c) de gestion de ressources radio selon l'une quelconque des revendications 7, 8 et 9, dans lequel l'agencement (112c, 212c, 312c) de gestion de ressources radio est en outre configuré pour fonctionnellement attribuer lesdits un ou plusieurs services (Se0, Se1, Se2, Se3) aux ressources disponibles du spectre de fréquences (F1, F2, F3, F4) sur la base d'une compressibilité conjointe unique des services (Se0, Se1, Se2, Se3).

12. Agencement (112c, 212c, 312c) de gestion de ressources radio selon l'une quelconque des revendications 7, 8 et 9, dans lequel l'agencement (112c, 212c, 312c) de gestion de ressources radio est en outre configuré pour fonctionnellement :

   - catégoriser lesdits un ou plusieurs services (Se0, Se1, Se2, Se3) de sorte que les sous-flux des un ou plusieurs services (Se0, Se1, Se2, Se3) sont catégorisés par rapport à la compressibilité, et
   - attribuer lesdits un ou plusieurs services (Se0, Se1, Se2, Se3) aux ressources disponibles du spectre de fréquences (F1, F2, F3, F4) de sorte que des sous-flux compressibles des un ou plusieurs services (Se0, Se1, Se2, Se3) sont attribués aux ressources volatiles du spectre.

Frequency Spectrum Resource Aggregation and Resource Management

F1  F2  F3  F4

**Fig. 1a**

100; 200; 300

F1  F2  F3  F4

Se0  Se1  Se2  Se3  S1

**Fig. 1b**

100; 200; 300

F1  F2  F3  F4

Se0  Se1  Se2  Se3

**Fig. 1c**

100

130

120

120

112

112c
RRM

114

350

110

**Fig. 2a**

210

230

212

220
MS/UE

220
MS/UE

212c
RRM

212a
BTS/NB

212a
BTS/NB

212b
BSC/
RNC

214

214a
SGSN

214b
GGSN

350

**Fig. 2b**

**Fig. 2c**

S1 — START

S2 — Categorize Available Frequency Spectrum Resources (F0, F1, F2, F3· · ·Fn) with Respect to Volatility
$(0 \leq V0 < V1 < V2 < V3 \cdots < Vn)$

S3 — Categorize Provided Service(s) (Se0, Se1, Se2, Se3· · ·Sem) with respect to Compressibility (Cs1, Cs2, Cs3· · ·Csm)

S4 — Service Compressibility > Csm?
Yes → S4' — Assign Service to Spectrum Resource with Volatility = Vn

S5 — Service Compressibility > Cs3?
Yes → S5' — Assign Service to Spectrum Resource with Volatility = V3
No ↓

S6 — Service Compressibility > Cs2?
Yes → S6' — Assign Service to Spectrum Resource with Volatility = V2
No ↓

S7 — Service Compressibility > Cs1?
Yes → S7' — Assign Service to Spectrum Resource with Volatility = V1
No ↓

S8 — Assign Service to Spectrum Resource with Volatility = V0

S9 — Assign Further Services ?
No ↓

S10 — END

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2009143025 A1

- EP 1641186 A1